Europäisches Patentamt

European Patent Office

Office européen des brevets

(19)

(11) Veröffentlichungsnummer: **0 100 306 B2**

# (12) NEUE EUROPÄISCHE PATENTSCHRIFT

(45) Veröffentlichungstag der neuen Patentschrift:
04.09.91 Patentblatt 91/36

(51) Int. Cl.$^5$: **C04B 35/00, C04B 35/10, C04B 35/66**

(21) Anmeldenummer: 83890118.9

(22) Anmeldetag: 20.07.83

(54) Verfahren zur Herstellung von feuerfesten, kohlenstoffhaltigen, nicht-basischen und nicht-isolierenden Steinen und Massen.

(30) Priorität: 22.07.82 AT 2841/82

(43) Veröffentlichungstag der Anmeldung:
08.02.84 Patentblatt 84/06

(45) Bekanntmachung des Hinweises auf die
Patenterteilung:
02.12.87 Patentblatt 87/49

(45) Bekanntmachung des Hinweises auf die
Entscheidung über den Einspruch:
04.09.91 Patentblatt 91/36

(84) Benannte Vertragsstaaten:
BE DE FR GB IT LU NL SE

(56) Entgegenhaltungen:
DE-A- 2 249 418
DE-A- 2 714 735
DE-A- 2 736 442
DE-A- 2 839 080
GB-A- 456 602
Th. Chvatal et al., Verhalten hochkorundhaltiger Feuerfestmassen, gebunden mit festen Phosphaten, bei hohen Temperaturen,
Sprechsaal 110 (1977), S. 600-601

(56) Entgegenhaltungen:
Th. Chvatal, Eva Hasenöhrl, Ein Beitrag zur
Erhärtung der sauren Phosphatbinder,
Sprechsaal 110 (1977), S. 677-679
Th. Chvatal, Stand der feuerfesten Phosphat·
bindung heute, Sonderdruck aus Sprechsaal
10/1975

(73) Patentinhaber: Radex Deutschland
Aktiengesellschaft für feuerfeste Erzeugnisse
W-5401 Urmitz b. Koblenz (DE)

(72) Erfinder: Dötsch, Lorenz
Koblenzer Strasse 88
W-5400 Koblenz (DE)
Erfinder: Hösler, Margit
Kaiser-Heinrich-Strasse 48
W-5401 Urmitz/Rh. (DE)
Erfinder: Nebgen, Peter, Dipl.Ing.
Auf"m Gräverich 22
W-5414 Vallendar (DE)
Erfinder: Weidemüller, Christian, Dipl.Ing.
Hans-Böckler-Strasse 121
W-5450 Neuwied (DE)

(74) Vertreter: Becker, Thomas, Dr., Dipl.-Ing. et a
Eisenhüttenstrasse 2
W-4030 Ratingen 1 (DE)

EP 0 100 306 B2

## Beschreibung

Die Erfindung betrifft ein Verfahren zur Herstellung von feuerfesten, kohlenstoffhaltigen, nicht-basischen und nichtisolierenden Steinen und Massen.

Es sind bereits seit langem feuerfeste, kohlenstoffhaltige Erzeugnisse verschiedenster Art bekannt, und von diesen werden besonders häufig solche verwendet, die aus einem basischen Material aufgebaut und mit Teer bzw. Pech gebunden und/oder imprägniert sind. Mit Teer oder Pech gebundene und/oder imprägnierte Steine und Massen haben aber ganz allgemein den Nachteil, daß bei dem bei ihrer Verwendung erfolgenden Erhitzen gesundheitsschädliche und eine Gefährdung der Umwelt bewirkende Dämpfe entwickelt werden. Dieser Nachteil kann zumindest teilweise dadurch beseitigt werden, daß man die Erzeugnisse vor ihrer Verwendung in einer nicht-oxidierenden Atmosphäre tempert oder brennt, doch ist diese Behandlung, wenn sie wirklich voll wirksam sein soll, mit hohen Kosten verbunden. Im wesentlichen das gleiche gilt auch für die Herstellung von Steinen und Massen mit einer Heißpechbindung, also von Erzeugnissen, die mit Pech bzw. Teer in der Hitze gebunden werden. In neuester Zeit ist auch ein Verfahren bekannt geworden, bei dem ein feuerfestes Material, wie Spinell, Magnesia, Magnesiachromit, Korund oder Tonerdesilikat mit mehr als 30 Gew.-% Al$_2$O$_3$, mit 1 bis 20 Gew.-% Kohlenstoff in Form von Graphit, Ruß oder Kohlenstaub oder einer Mischung dieser Stoffe und ferner einem Phosphatbindemittel vermischt und zu Steinen verformt wird, die dann bei Temperaturen bis zu 800°C getempert werden (DE-C-27 36 442).

Ferner sind mit Wasser kaltabbindende, feuerfeste Massen und Mörtel, bestehend aus Zuschlagsstoffen, Mikrofüllstoffen und Bindemitteln aus Zement und Phosphat bekannt, in welchen das Bindemittel aus einer Mischung von 60 bis 95 Gew.-% Portlandzement und 5 bis 40 Gew.-% festem, saurem Phosphat besteht, dessen wässerige Lösung einen pH-Wert von unter 6,0 aufweist, wobei der Bindemittelanteil 1 bis 20 Gew.-% beträgt (DE-B-22 49 418). Diese Massen und Mörtel können als Mikrofüllstoffe Bindeton, Bentonit, Kaolin, feinste Tonerden, feinstes Chromoxid, Kieselgläser und Graphit. als Zuschlagsstoffe gekörntes Material aus Korund, Mullit, Bauxit, Schamotte, Spinell, Sillimanit, Quarzit und Zirkon enthalten und lassen sich in für Feuerbeton üblicher Weise durch Stampfen, Vibrieren, Schütten, Streichen oder Spritzen verarbeiten. Aus diesen Massen hergestellte Probekörper, in welchen infolge des stark überwiegenden Gehaltes an Portlandzement im Bindemittel ein Gewichtsverhältnis von Portlandzement zu Phosphat von mindestens 1,5 vorliegen muß und dieses Verhältnis sogar bis zu 19,0 betragen kann, haben lange Ausschalzeiten, d. h. Abbindezeiten, z. B. Abbindezeiten von 15 bis 60 min, nach Tempern bei 110 °C bzw. 100 °C eine Kaltdruckfestigkeit (KDF) von 12,75 N/mm$^2$, und nach Tempern bei 1000 °C eine KDF von 17,3 bzw. 19,6 N/mm$^2$. Schließlich ist hier noch ein Material zur Herstellung von porösen, feuerfesten, isolierenden Ausfüllungen von Hohlräumen, Fugen u. dgl. und von Formteilen zu erwähnen, das mindestens einen feuerfesten Stoff und ein mit Wasser unter Wasserstoffentwicklung reagierendes Metall enthält und aus einer flüssigen und einer festen Komponente besteht, wobei die flüssige Komponente eine wässerige Säurelösung und die feste Komponente ein Pulvergemisch ist, das ein mit der Säure unter Wasserstoffentwicklung reagierendes Metall, mindestens einen feuerfesten Rohstoff und mindestens ein anorganisches Bindemittel, das hydraulisch und chemisch abbindet, enthält (DE-A-27 14 735). Die feste Komponente kann als anorganisches Bindemittel Kalziumaluminat und/oder Alkalisilikat, die flüssige Komponente als anorganisches Bindemittel Aluminiumphosphat enthalten, als Säure können Phosphorsäuren vorliegen, als feuerfeste Rohstoffe können z. B. Quarz und/oder Aluminiumoxid, Schamotte, Siliziumcarbid, Zirkonoxid, Zirkonsilikat. Chromerze u. a. verwendet werden, und die feste Komponente kann Graphit in einer Menge bis zu 15 Gew.-% enthalten. Dieses Material hat gute isolierende Eigenschaften und ist für alle Verwendungsarten im Feuerfestbereich, jedoch nur außerhalb der unmittelbaren Feuerzone, geeignet.

Die Erfindung zielt nun darauf ab, ein Verfahren zu schaffen, das es in allen Fällen und insbesondere auch bei Kohlenstoffgehalten von über 8 Gew.-%, bezogen auf das fertige Produkt, ermöglicht, vor allem feuerfeste Steine, das heißt Steine mit einem Kegelfallpunkt von mindestens 1500 °C. die nicht-basisch und nicht-isolierend sind und eine verbesserte Festigkeit und Porosität aufweisen, zu erhalten. Demnach betrifft die Erfindung ein Verfahren zur Herstellung von feuerfesten, kohlenstoffhaltigen, nicht-basischen und nicht-isolierenden Steinen und Massen mit einer Phosphatbindung und einer hydraulischen Bindung, die für eine Verwendung in der Feuerzone von metallurgischen Öfen und Gefäßen geeignet sind, wobei dieses Verfahren dadurch gekennzeichnet ist, daß feuerfestes Material aus der Gruppe Tonerdesilikate, Schamotte, Zirkon, Zirkondioxid und insbesondere Tonerde, z. B. in Form von Korund oder Bauxit, und deren Mischungen, in gekörnter Form mit 5 bis 50 Gew.-% feinverteiltem, kohlenstoffhaltigem Material in Form von Graphit, einem Bindemittel, das aus Phosphorsäure oder Monoaluminiumphosphat als chemisch abbindender, eine Phosphatbindung ergebender Komponente, vorzugsweise Phosphorsäure, in einer Menge entsprechend 1 bis 10 Gew.-% P$_2$O$_5$ und 1 bis 10 Gew.-% einer hydraulisch abbindenden Komponente vorzugsweise Tonerdezement, deren Menge geringer ist als die der chemisch abbindenden Komponente. besteht, und Wasser vermischt und, gewünschtenfalls nach

2

Verformung zu Steinen, getrocknet wird und die Steine vorzugsweise getempert werden, wobei die Prozentangaben auf die getrockneten Massen bzw. Steine bezogen sind.

Beim Verfahren gemäß der Erfindung wird der Graphit vorzugsweise in einer Menge verwendet, die einen Kohlenstoffgehalt von 5 bis 15 Gew.-%, bezogen auf das fertige Erzeugnis, ergibt.

Die Komponente des Bindemittels, welche die Phosphatbindung liefert, wird der Mischung aus dem feuerfesten Material bzw. den feuerfesten Materialien und den anderen Stoffen zweckmäßig in einer Menge zugesetzt, die einen Gehalt von 2 bis 6 Gew.-% $P_2O_5$ im fertigen Erzeugnis vor dem Tempern ergibt. Als solche Komponente kommt insbesondere Phosphonsäure in Betracht, doch kann auch Monoaluminiumphosphat benutzt werden. Die hydraulisch abbindende Komponente des Bindemittels wird vorzugsweise in einer Menge von 2 bis 5 Gew.-%, bezogen auf das fertige Erzeugnis, verwendet und kann irgendein Zement, vorzugsweise ein Tonerde- bzw. Kalziumaluminatzement, sein.

Zur Verhinderung oder Verzögerung einer Oxidation und eines Verbrennens des kohlenstoffhaltigen Materials wird vorzugsweise ein oxidationshemmender Stoff aus der Gruppe metallisches Aluminium, metallisches Silizium, Sialone, Siliziumnitrid, Siliziumoxynitrid, Ferrosilizium, metallisches Magnesium, Borcarbid, Bornitrid oder Mischungen dieser Stoffe in einer Menge von 0,1 bis 10 Gew.-%, bezogen auf das fertige Erzeugnis, zugefügt.

Die Herstellung der erfindungsgemäßen Steine und Massen erfolgt auf die Weise, daß die Bindemittel und das Wasser einer Mischung der übrigen Stoffe zur Verhinderung eines vorzeitigen Abbindens erst zuletzt zugesetzt werden. Die Menge an Wasser wird entsprechend dem gewünschten Zweck bemessen. Gegebenenfalls kann auch ein getrenntes Vormischen der Grobkorn- und der Feinkornanteile vor dem Zusatz der Bindemittel und des Wassers erfolgen. Die erhaltenen Mischungen können, wenn dies gewünscht wird, durch Pressen, Stampfen, Rütteln oder Vibrieren zu Steinen verformt werden oder aber direkt als solche z. B. als Stampfmassen, Gießmassen, Spritzmassen und Mörtelmassen verwendet werden. Im Falle von Steinen sollen diese für den Erhalt bester Ergebnisse bei Temperaturen bis zu 500 °C in einer nicht-oxidierenden Atmosphäre getempert werden.

Die Erfindung wird an Hand der folgenden Beispiele, die jedoch in keiner Weise einschränkend aufzufassen sind, näher erläutert.

Beispiel 1

Verfahren zur Herstellung von Tonerdesilikatsteinen.

Zur Herstellung von Tonerdesilikatsteinen wurde von einer Mischung folgender Stoffe ausgegangen

|  | Gew.-% |
|---|---|
| Andalusit (Korngröße 0 bis 4 mm) | 77,11 |
| Kalzinierte Tonerde | 4,82 |
| Ton | 4,82 |
| Graphit | 9,64 |
| Tonerdezement | 3,37 |
| Metallisches Aluminium oder Magnesium | 0,24 |
|  | 100,00 |

Auf 100 kg dieser Mischung wurden 8 kg technische Phosphorsäure (75 % $H_3PO_4$) zugesetzt, und die erhaltene Mischung wurde unter einem Druck von 60 bis 100 N/mm² zu Steinen verformt.

Diese Steine hatten nach einer Temperung bzw. einem Brand folgende Eigenschaften :
Nach Temperung bei 250 °C

| Raumgewicht, g/cm³ | 2,60 |
|---|---|
| offene Porosität, % | 11-12 |
| Kaltdruckfestigkeit, N/mm² | 35-40 |
| Warmdruckfestigkeit bei 500 °C, N/mm² | 85-90 |
|  | — |

Nach Brand bei 1000 °C in reduzierender Atmosphäre:

| Raumgewicht, g/cm³ | 2,50 |
|---|---|
| offene Porosität. % | 12-13 |
| Kaltdruckfestigkeit. N/mm² | 60-70 |

Nach Ausbrand des Kohlenstoffes bei 1000 °C :

| | |
|---|---|
| Raumgewicht, g/cm³ | 2,35 |
| offene Porosität, % | 21-22 |
| Kaltdruckfestigkeit, N/mm² | 30-40 |

Ein wesentliches Kennzeichen der nicht-basischen Steine gemäß der Erfindung besteht darin, daß sich, wie eine Messung der Warmdruckfestigkeit bei 500 °C ergibt, ihre Festigkeiten bei höheren Temperaturen beträchtlich steigern, und daß nicht nur nach einem Brand bei 1000 °C in reduzierender Atmosphäre, sondern auch noch nach dem Ausbrennen des Kohlenstoffes gute Festigkeiten vorliegen. Das gleiche gilt auch für die Massen gemäß der Erfindung, die in Form von z. B. Stampfmassen, Gießmassen, Spritzmassen oder Mörtelmassen vorliegen können.

Abschließend kann festgehalten werden, daß selbst bei einer Erhöhung des Gehaltes an Graphit in den erfindungsgemäßen Erzeugnissen bis zu 50 Gew.-%, bezogen auf die fertigen Erzeugnisse, brauchbare Ergebnisse erhalten werden, doch sinkt die Festigkeit nach Ausband des Kohlenstoffes bei 1 000°C in oxidierender Atmosphäre bei höheren Kohlenstoffgehalten mitunter beträchtlich ab.

## Patentansprüche

1. Verfahren zur Herstellung von feuerfesten, kohlenstoffhaltigen, nicht-basischen und nicht-isolierenden Steinen und Massen mit einer Phosphatbindung und einer hydraulischen Bindung, die für eine Verwendung in der Feuerzone von metallurgischen Öfen und Gefäßen geeignet sind, dadurch gekennzeichnet, daß feuerfestes Material aus der Gruppe Tonerdesilikate, Schamotte, Zirkon, Zirkondioxid und insbesondere Tonerde, z. B. in Form von Korund oder Bauxit, und deren Mischungen, in gekörnter Form mit 5 bis 50 Gew.-% feinverteiltem, kohlenstoffhaltigem Material in Form von Graphit, einem Bindemittel, das aus Phosphorsäure oder Monoaluminiumphosphat als chemisch abbindender, eine Phosphatbindung ergebender Komponente, vorzugsweise Phophorsäure, in einer Menge entsprechend 1 bis 10 Gew.-% $P_2O_5$ und 1 bis 10 Gew.-% einer hydraulisch abbindenden Komponente, vorzugsweise Tonerdezement, deren Menge geringer ist als die der chemisch abbindenden Komponente, besteht, und Wasser vermischt und, gewünschtenfalls nach Verformung zu Steinen, getrocknet wird die Steine vorzugsweise getempert werden, wobei die Prozentangaben auf die getrockneten Massen bzw. Steine bezogen sind.

2. Verfahren nach Anspruch 1, dadurch gekennzeichnet, daß das kohlenstoffhaltige Material in einer Menge zugesetzt wird, die einen Kohlenstoffgehalt von 5 bis 15 Gew.-%. bezogen auf das fertige Erzeugnis, ergibt.

3. Verfahren nach Anspruch 1 oder 2, dadurch gekennzeichnet, daß die die Phosphatbindung ergebende Komponente des Bindemittels in einer Menge zugesetzt wird, die einen Gehalt von 2 bis 6 Gew.-% $P_2O_5$ im fertigen Erzeugnis vor dem Tempern ergibt.

4. Verfahren nach einem der Ansprüche 1 bis 3, dadurch gekennzeichnet, daß die hydraulisch abbindende Komponente des Bindemittels in einer Menge von 2 bis 5 Gew.-%, bezogen auf das fertige Erzeugnis, verwendet wird.

5. Verfahren nach einem der Ansprüche 1 bis 4, dadurch gekennzeichnet, daß als oxidationshemmende Stoffe metallisches Aluminium, metallisches Silizium, Sialone, Siliziumnitrid, Siliziumoxynitrid. Ferrosilizium, metallisches Magnesium, Borcarbid, Bornitrid oder eine Mischung dieser Stoffe in einer Menge von 0,1 bis 10 Gew.-%. bezogen auf das fertige Erzeugnis, zugesetzt werden.

## Claims

1. Process of producing refractory, non-basic and non-insulating bricks and masses having a phosphate bond and a hydraulic bond, which bricks and masses are suited for use in the firing zone of metallurgical furnaces and vessels, characterized in that refractory material from the group aluminosilicates, fireclay, zircon, zirconium dioxide and particularly alumina, e. g. in the form of corundum or bauxite, and mixtures thereof, is mixed in granular form with 5 to 50% by weight of finely divided carbonaceous material in the form of graphite, a binding agent consisting of phosphoric acid or monoaluminium phosphate as chemically bonding component yielding a phosphate bond, preferably phosphoric acid, in an amount corresponding to 1 to 10% by weight of $P_2O_5$, and 1 to 10% by weight of a hydraulically bonding component, preferably aluminous cement, the amount of which is smaller than that of the chemically bonding component, and water, and, after forming into bricks, if desired, is dried and the bricks are preferably tempered, the percentages being related to the dried masses or bricks respectively.

2. Process according to claim 1, characterized in that the carbonaceous material is added in an amount yielding a carbon content of 5 to 15 % by weight, related to the finished product.

3. Process according to claim 1 or 2, characterized in that the component of the binding agent yielding the phosphate bond is added in an amount producing a content of 2 to 6 % by weight of $P_2O_5$ in the finished product before tempering.

4. Process according to any of claims 1 to 3, characterized in that the hydraulically bonding component of the binding agent is used in an amount of 2 to 5% by weight, related to the finished product.

5. Process according to any of claims 1 to 4, characterized in that there are added metallic aluminium, metallic silicon, sialone, silicon nitride, silicon oxinitride, ferrosilicium, metallic magnesium, boron carbide, boron nitride or a mixture of these agents in an amount of 0.1 to 10 % by weight, related to the finished product, as agents for inhibiting oxidation.


**Revendications**

1. Procédé de fabrication de briques et masses non basiques et non isolantes réfractaires et contenant du carbone avec une liaison phosphate et une liaison hydraulique, qui sont adaptées à une utilisation dans la zone de combustion de fours et cuves métallurgiques, caractérisé en ce que le matériau réfractaire du groupe silicate d'alumine, chamotte réfractaire, zircon, dioxyde de zirconium et en particulier alumine, par exemple sous forme de corindon ou de bauxite, et leurs mélanges, sous forme de granules est mélangé à 5 à 50 % en poids d'un matériau contenant du carbone et finement subdivisé, sous la forme de graphite, à un agent liant qui se compose d'acide phosphorique ou de phosphate monoaluminique en tant que composant liant chimique donnant une liaison phosphate, avantageusement de l'acide phosphorique, en une quantité correspondant à 1 à 10 % en poids de $P_2O_5$, et à 1 à 10 % en poids d'un composant liant hydraulique, avantageusement du ciment d'alumine, dont la masse est plus faible que celle du composant liant chimique, et à de l'eau, et, le cas échéant après mise sous la forme de briques, est séché et les briques sont de préférence recuites, les pourcentages indiqués étant rapportés aux masses ou aux briques séchées.

2. Procédé selon la revendication 1, caractérisé en ce que le matériau contenant du carbone est ajouté en une quantité qui donne une teneur en carbone de 5 à 15 % en poids par rapport au produit fini.

3. Procédé selon la revendication 1 ou 2, caractérisé en ce que le composant donnant la liaison phosphate de l'agent liant est ajouté en une quantité qui donne une teneur de 2 à 6 % en poids de $P_2O_5$ dans le produit fini, avant recuit.

4. Procédé selon l'une des revendications 1 à 3, caractérisé en ce que le composant liant hydraulique de l'agent liant est utilisé en une quantité de 2 à 5 % en poids, par rapport au produit fini.

5. Procédé selon l'une des revendications 1 à 4, caractérisé en ce que l'on ajoute, en tant que matières inhibant l'oxydation, de l'aluminium métallique, du silicium métallique, du sialone, du nitrure de silicium, de l'oxynitrure de silicium, du ferrosilicium, du magnésium métallique, du carbure de bore, du nitrure de bore ou un mélange de ces matières en une quantité de 0,1 à 10 % en poids par rapport au produit fini.